# FASCICULE DE BREVET EUROPEEN

(11) **EP 0 765 923 B1**
(45) Date de publication et mention de la délivrance du brevet: **06.12.2000**
(21) Numéro de dépôt: 96401940.0
(22) Date de dépôt: 11.09.1996
(51) Int. Cl.: C09J 123/08

(54) **Compositions adhésives thermofusibles à base de copolymères comprenant de l'éthylène, de l'acétate de vinyle et du vinyl alcoxy silane**
Schmelzklebestoff-Zusammensetzungen auf der Basis von Copolymeren, die Ethylen-, Vinylacetat- und Vinylalkoxysilan-Einheiten enthalten
Hot-melt adhesives based on ethylene copolymers with vinyl acetate and vinyl alcoxy silane

(30) Priorité: 28.09.1995 FR 9511384
(43) Date de publication de la demande: 02.04.1997
(73) Titulaire: Atofina, 92800 Puteaux (FR)
(72) Inventeur: Chenard, Jean-Yves, 64000 Pau (FR)
(74) Mandataire: Neel, Henry

(56) Documents cités:
- WO-A-92/00362
- CA-A- 2 113 961
- JP-A- 55 040 721

## Description

La présente invention a pour objet des compositions adhésives thermofusibles, à base d'un copolymère comprenant des motifs d'éthylène, d'acétate de vinyle et de vinyl alcoxy silane, réticulables à l'humidité. Plus particulièrement, elle concerne la stabilité au stockage des compositions adhésives thermofusibles comprenant au moins un catalyseur de réticulation.

Les adhésifs thermofusibles ou "hot melt" sont des formulations solides à température ordinaire ,mises en oeuvre à l'état fondu (par exemple entre 130 et 180 ° C ) et qui durcissent par refroidissement. Ils comportent généralement deux constituants principaux : un polymère thermoplastique et une résine tackifiante . On y ajoute le plus souvent un certain nombre d'additifs tels que cires, stabilisants, charges, catalyseur de réticulation .

Ces adhésifs thermofusibles offrent industriellement de nombreux avantages :
- mise en oeuvre aisée dans des installations automatisées,
- temps de prise court ( quelques secondes ) autorisant des vitesses de collage élevées,
- très bonne adhésion sur une grande variété de substrats : papier ,bois ,carton ,textiles ,plastiques ,verre , aluminium et autres ,
- coût raisonnable

Des compositions adhésives thermofusibles à base d 'un copolymère éthylénique et vinyl silane ou à base de copolymère éthylénique,acétate de vinyle et vinyl silane ont déjà été décrites dans différents brevets. Ainsi le brevet GB 2197326 décrit une composition adhésive thermofusible à base d' un copolymère éthylène - acétate de vinyle greffé silane ayant un faible indice de fluidité (< 100) Pour stocker ces compositions en présence d' un catalyseur de réticulation, ces auteurs utilisent une cartouche spéciale contenant un desséçhant tel que le silica gel.

A.M. Henderson (TAPPI Proceedings 1994) a décrit l'utilisation d'un copolymère éthylène - acétate de vinyle - vinyl alcoxy silane ayant un faible indice de fluidité ( < 5 ) en tant qu'adhésifs. Une bonne adhésion à température élevée n'a pu être obtenue que pour des compositions adhésives dont la teneur en copolymère est supérieure à 75 % en poids. De plus pour obtenir une stabilité suffisante au stockage, il est nécessaire de conditionner ces compositions adhésives séparément du catalyseur de réticulation.

Par ailleurs, la mise en oeuvre des adhésifs thermofusibles à base de copolymère à faible indice de fluidité n' est pas très aisée. En effet selon GB 2197326 et Henderson, cette mise en oeuvre consiste d 'abord à former un film et ensuite à l'insérer entre les substrats à coller. Ainsi on perd tous les avantages des adhésifs thermofusibles.

Des compositions adhésives thermofusibles à base d'un copolymère d'éthylène et vinyl triméthoxy silane, ayant un indice de fluidité supérieur à 100, ont fait l'objet de la demande CA 2113961. Une stabilité suffisante au stockage de ces compositions adhésives comprenant un catalyseur de réticulation n'a pu être obtenue qu'après avoir encapsulé ce dernier avec un polymère issu de la polymérisation en émulsion.

Il a maintenant été trouvé des compositions adhésives thermofusibles ne présentant pas les inconvénients énoncés précédemment et qui, de plus, offrent l'avantage de pouvoir être mises en oeuvre aisément à relativement basse température (inférieure à 140 ° C ). Les compositions adhésives thermofusibles à base d'un copolymère comprenant des motifs d'éthylène, acétate de vinyle, vinyl alcoxy silane, ayant un indice de fluidité supérieur à 150, forment l'objet de la présente invention.

Un autre objet de la présente invention concerne la stabilité au stockage des compositions adhésives thermofusibles, à base d'un copolymère comprenant les motifs d'éthylène, acétate de vinyle, vinyl alcoxy silane et comprenant au moins un catalyseur de réticulation. Il n'est pas nécessaire ue ce catalyseur soit encapsulé.

La présente invention concerne une composition adhésive thermofusible à base d'un copolymère comprenant des motifs d'éthylène, acétate de vinyle, vinyl alcoxy silane, et comprenant au moins un catalyseur de réticulation caractérisée en ce que sa teneur en eau est inférieure à 1000 ppm, qu'elle contient un agent déshydratant et que son indice de fluidité est supérieur à 150.

La présente invention fournit donc des compositions adhésives thermofusibles à base d'un copolymère comprenant des motifs d'éthylène, acétate de vinyle, vinyl alcoxy silane caractérisées en ce que l'indice de fluidité du copolymère à 190 ° C est supérieur à 150 et de préférence compris entre 400 et 1200. Avantageusement, les compositions selon l'invention sont à base d'un copolymère comprenant des motifs d'éthylène, acétate de vinyle et vinyl alcoxy silane non greffé.

La présente invention concerne également les compositions adhésives thermofusibles à base d'un copolymère comprenant des motifs d'éthylène, acétate de vinyle, vinyl alcoxy silane comprenant au moins un catalyseur de réticulation caractérisées en ce qu'elles sont sensiblement anhydres. La teneur en eau de ces compositions est de préférence inférieure à 1000 ppm. Une teneur en eau inférieure à 200 ppm est particulièrement préférée.

Le copolymère selon l'invention peut être obtenu par polymérisation radicalaire de l'éthylène, d 'acétate de vinyle et du vinyl alcoxy silane sous haute pression dans un réacteur tubulaire suivant un procédé décrit dans la demande FR 9203746 .

Ce copolymère peut comprendre en pourcentage massique :
- 50 - 89 % d 'éthylène
- 10 - 45 % d 'acétate de vinyle
- 1 - 5 % d 'un vinyl alcoxy silane de formule 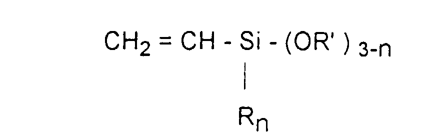 où
   R représente un radical hydrocarboné contenant de 1 à 8 atomes de carbone
   R' = -CH₃, -C₂H₅, -CH₂-CH₂-OCH₃
   et n = 0 , 1 ou 2 , de préférence avec n = 0 ou 1 .

Parmi les vinyl alcoxy silane, on peut citer le vinyl triméthoxy silane (VTMS), le vinyl triéthoxysilane, le vinyl tri(éthoxyméthoxy)silane, le vinyl méthyl diméthoxy silane, le vinyl méthoxy diméthyl silane, le vinyl méthyl diéthoxy silane, le vinyl éthoxy diméthyl silane, le vinyl méthyl di(éthoxyméthoxy) silane, le vinyl éthyl diméthoxy silane et le vinyl (éthoxyméthoxy)diméthyl silane. On utilise de préférence le vinyl triméthoxy silane et le vinyl méthyl diméthoxy silane.

Les compositions adhésives thermofusibles selon l'invention, peuvent comprendre un ou plusieurs copolymères comprenant des motifs d'éthylène, acétate de vinyle, vinyl alcoxy silane.

Les résines tackifiantes, autre constituant principal des adhésifs thermofusibles peuvent être choisies parmi les familles des colophanes, des résines terpéniques et des résines de pétrole. Les résines tackifiantes préférées sont des résines d'hydrocarbures aliphatiques, aromatiques ou terpéniques éventuellement modifiées ou hydrogénées. Elles peuvent être utilisées dans un rapport pondéral résine / copolymère compris entre 0,3 et 3. Le rapport pondéral résine / copolymère est de préférence compris entre 0,5 et 2 .

Ces résines tackifiantes peuvent être solides ou liquides. L'utilisation des résines liquides en combinaison avec des copolymères à forte teneur en acétate de vinyle (par exemple supérieure à 30 % ), permet d'obtenir des formulations auto adhésives . On entend par formulations auto adhésives, des formulations ayant une adhésion élevée à température ambiante. L'adhésion est dans ce cas réalisée, à température ambiante, par simple accostage sous pression de substrats préalablement enduits d 'adhésifs.

Les résines tackifiantes doivent être exemptes de groupes fonctionnels tels que hydroxydes, susceptibles de réagir avec les groupes alcoxy du copolymère et doivent être soigneusement séchées avant utilisation.

La présence d'un catalyseur améliore la vitesse de réticulation.

D 'une manière générale tous les catalyseurs, qui accélèrent la réaction de réticulation des groupes alcoxy portés par les copolymères selon l'invention, peuvent convenir.

Avantageusement, les catalyseurs à base de sels d 'étain tels que le laurate de dibutyl étain (DBTL) ou l'octoate stanneux sont choisis. Les teneurs utilisées sont en général comprises entre 0,01 et 1 % en poids par rapport à celui du copolymère et de préférence comprises entre 0,025 et 0,2 % . Les sels d'étain peuvent être utilisés soit seuls soit en combinaison avec des amines de faible volatilité telle que la lauryl amine . Les teneurs en amines sont en général comprise entre 0 et 0,5 % et de préférence comprise entre 0 et 0,1 % en poids par rapport à celui du copolymère. Ces catalyseurs sont ajoutés tels quels dans la composition de l'invention.

Outre les constituants principaux et les catalyseurs de réticulation les adhésifs thermofusibles peuvent contenir des cires et des plastifiants, antioxydants, colorants, agents déshydratant et charges diverses chimiquement neutres vis à vis des fonctions alcoxy des copolymères et préalablement séchées avant utilisation .

Les agents déshydratants permettent d'améliorer la stabilité des adhésifs thermofusibles au stockage en éliminant toute trace d 'eau qui pourrait subsister après fabrication de ces adhésifs .Pour assurer une stabilité satisfaisante , la teneur en eau totale des adhésifs thermofusibles est avantageusement inférieure à 1000 ppm et de préférence inférieure à 200 ppm par rapport au poids de l'adhésif. Sont préférentiellement utilisés, les trialcoxy silanes de faible volatilité tel que le vinyl tri(méthoxyéthoxy) silane (VTMES).

La quantité d'agent déshydratant peut être à titre d'exemple jusqu'à 5 parties en poids pour 100 parties du copolymère. Elle dépend biensûr de la quantité d'eau qu'il peut fixer. Avantageusement, la quantité de déshydratant est comprise entre 1 et 4 parties pour 100 parties de copolymère et de préférence 2 à 3 parties.

Avantageusement, l'agent déshydratant est un alcoxysilane de faible volatilité et/ou un alcoxysilane qui s'hydrolyse plus facilement que le silane du copolymère.

La présente invention a également pour objet, le procédé d'obtention de ces compositions adhésives comprenant au moins un catalyseur de réticulation.

Selon l'invention le procédé est caractérisé en ce que le ou les copolymères sont soumis à un séchage sous vide à une température inférieure à 180 ° C ,suivi d'un purge par un gaz sec à une température inférieure à 180 °C.

Avantageusement la température de séchage et celle du purge par le gaz sec est comprise entre 100° C et 140 ° C.

Le gaz sec utilisé pour purger les copolymères peut par exemple être l'air ou l'azote.

Les compositions adhésives thermofusibles sensiblement anhydres selon l'invention peuvent être fabriquées :
- en mélangeant et en séchant sous vide à 120 ° C
   le copolymère ou les copolymères comprenant les motifs d'éthylène - acétate de vinyle -vinyl alcoxy silane, les résines, les cires, les colorants, les antioxydants et éventuellement des charges dans un réacteur à double enveloppe muni d'un agitateur à ancre,
- et en y ajoutant à 120 °C après avoir purgé à l'aide d'un gaz sec, successivement l'agent déshydratant et le catalyseur.

Après un dernier débullage sous vide à 120 ° C, l'adhésif thermofusible prêt à l'emploi est récupéré par coulée et peut être utilisé immédiatement ou conditionné à l'abri de l'humidité en cartouches étanches.

Ces adhésifs thermofusibles peuvent être mises en oeuvre à 130°C et leur viscosité à cette température est de l'ordre de 1 à 15 Pa S pour les compositions ne contenant pas de charge. Après maintien pendant 4 h à 130°C, l'accroissement de viscosité des adhésifs ne dépasse pas 10 %, ce qui est compatible avec les machines de dépose industrielle.

Ces compositions adhésives thermofusibles selon l'invention présentent une très bonne adhésion sur divers substrats. Des propriétés adhésives remarquables à haute température ont particulièrement été obtenues sur le verre et l'aluminium.

Ainsi la présente invention fournit des adhésifs thermofusibles qui offrent une facilité de mise en oeuvre, une stabilité de stockage élevée, un temps ouvert approprié, une cohésion initiale élevée, une température de fluage sous charge qui augmente au fur et à mesure de l'avancement de la réticulation et une souplesse de produit après réticulation complète.

Dans les exemples suivants, on fait référence à diverses méthodes d'évaluation de propriétés thermiques et mécaniques soit des adhésifs en masse (traction, dureté), soit des joints collés (cohésion initiale, tenue SAFT, pelage...).

Les procédures de test utilisées sont les suivantes :

la mesure de la cohésion initiale s'opère en déposant sur une éprouvette en carton de largeur 40 mm un trait d'adhésif thermofusible de diamètre approximatif 1,5 mm.

On applique immédiatement une deuxième éprouvette en carton identique à la première et le joint collé ainsi réalisé est immédiatement suspendu en position verticale par son extrémité supérieure. On charge l'extrémité inférieure avec des masses de 150, 250 et 350 g après 15 s, 30 s, et 60 s. Le comportement du joint collé est noté de la façon suivante :
- pas de fluage : aucun déplacement des éprouvettes
- très léger fluage : glissement de l'ordre du millimètre
- fluage : glissement de l'ordre du centimètre
- cohésion nulle : rupture du joint collé

Ce test mesure la vitesse de prise de l'adhésif dans les secondes suivant le collage.

Le test SAFT (norme ASTM D4498) est un test mesurant la température maximale supportée par un joint collé sous une charge donnée. On opère de la façon suivante : on dépose à 130° C à l'extrémité d'une éprouvette en carton de largeur 40 mm, deux cordons d'adhésif de diamètre approximatif 1 mm distants l'un de l'autre de 15 mm environ. On applique immédiatement une seconde éprouvette identique à la première et on laisse refroidir l'assemblage collé ainsi obtenu. La surface de collage ainsi obtenue est d'environ 2,5 × 4 = 10 cm². L'assemblage collé est ensuite suspendu verticalement dans une étuve, chargé avec une masse de 250 g puis soumis à une montée en température de 25 à 200° C à la vitesse de 0,4°/mn. La tenue SAFT est la température à laquelle l'assemblage cède. Ce test est effectué dans les jours suivants le collage. Il met en évidence l'amélioration, au cours du temps de la tenue en température du hot melt de l'invention du fait de la réticulation progressive de l'adhésif.

Les tests de pelage ont été effectués conformément à la norme NFT T76-112. Pour les collage aluminium/aluminium, le test a été réalisé selon la méthode dite du pelage en T (partie 2 de la norme). On commence par fabriquer une plaque collée de 170 x 170 mm par dépôt à 130° C puis pressage à la même température entre deux feuilles d'aluminium (e = 0,1 mm) d'une quantité convenable d'adhésif.

Un cadre métallique carré de 170 x 170 x 1 mm permet d'assurer l'épaisseur désirée du joint de colle (1 mm). Des bandes de 25 mm de large sont après refroidissement découpées au massicot dans la plaque obtenue. Les collages ont été réalisés sans préparation de surface de l'aluminium. Le test de pelage en T est effectué à une vitesse de 100 mm/mn.

Pour les collages sur verre, le test a été réalisé selon la méthode dite des rouleaux flottants (partie 1 de la norme). Le joint est réalisé par dépose puis pressage à 130° C (pression de contact) de l'adhésif entre une bande de tissu de coton et une plaque de verre de 200 x 20 mm. Des fils de fer permettent d'assurer une épaisseur d'adhésif sensiblement constante et égale à 0,5 mm. Le verre utilisé a 5 mm d'épaisseur et est dégraissé à l'acétone avant collage. La vitesse de traction utilisée est de 100 mm/mn.

Les caractéristiques mécaniques en traction des adhésifs en masse ont été déterminées sur éprouvettes haltères type H2 (norme NFT 51-034) découpées dans une plaque d'adhésif de 2 mm d'épaisseur. La vitesse de traction utilisée est de 50 mm/mn.

La dureté Shore a été mesurée selon la norme NFT 51-109.

L'indice de fluidité (Ml) est mesuré à 190°C sous 2,16 Kg selon la norme ASTM D 1238-70 et exprimé en g/10 min

Dans tous les exemples, la quantité des monomères utilisés est donnée en pourcentage en poids.
Copolymère E/VA/VTMS = terpolymère d'éthylène - acétate de vinyle - vinyl triméthoxy silane.
Résine Escorez 5300 = résine d'hydrocarbures hydrogénés (EXXON)
Résine Krystalex F85 = résine d'α- methyl styrène (HERCULES)
Cire Victory Amber = cire microcristalline plastique (PETROLITE)
Cire H₂ = cire Fischer Tropsch (SASOL )
Antioxydant Irganox 1010 = tetrabis [ methylene 3 ( 3', 5' di tertiobutyl hydroxyphenyl) propionate ] méthane (CIBA )
Résine Hercures AR 100 = résine d'hydrocarbures aromatiques modifiée aliphatique d'HERCULES )
Paraffine 68-70° C = cire de paraffine standard
Cire Be Square 195 = cire microcristalline dure ( PETROLITE)

### Exemple 1

Le copolymère utilisé a les caractéristiques suivantes :
- 67,9 % d'éthylène
- 29,4 % d'acétate de vinyle
- 2,7 % de VTMS
- Ml 190° C = 1000

La formulation de l'adhésif thermofusible est la suivante (en parties en poids):
- Copolymère EVAVTMS 100
- Résine Escorez 5300 83
- Résine Krystalex F85 32
- Cire Victory Amber 64
- Cire H₂ 32
- Antioxydant Irganox 1010 3,2
- DBTL 0,14
- Laurylamine 0,035
- VTMES 2,24

La viscosité à 130° C de l'adhésif thermofusible est de 870 mPa.s immédiatement après fabrication. Après 4 heures à 130° C à l'abri de l'humidité, cette viscosité passe à 950 mPa.s (+ 9 %). Après 30 jours de stockage à 25° C en emballage étanche, la viscosité toujours mesurée à 130° C est de 1050 mPa.s (+ 20 %).

La cohésion initiale de la formule est bonne : pas de fluage sous 350 g après 15 s.

Des tests SAFT ont été effectués dans les conditions précitées après 1 jour, 15 et 30 jours de stockage à 25° C. Les résultats sont les suivants :

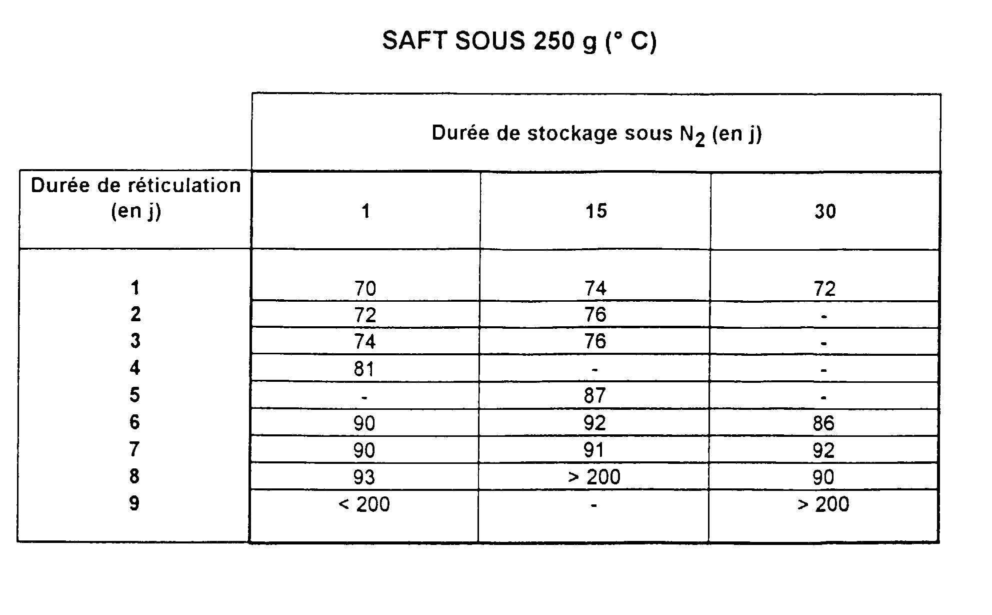

Cet exemple démontre la bonne tenue thermique des adhésifs de l'invention après réticulation et leur bonne stabilité au stockage en emballages étanches à température ambiante.

### Exemple 2

Le copolymère utilisé est celui de l'exemple 1. La formule utilisée est identique à celle de l'exemple 1 sauf la teneur en laurylamine qui a été doublée. La viscosité initiale à 130° C est de 870 mPa.s et passe à 890 mPa.s après 4 heures à 130° C (+ 2 %). La tenue SAFT > 200° C est obtenue après 7-8 jours de réticulation. Les autres caractéristiques sont inchangées en particulier la stabilité au stockage qui reste supérieure à un mois.

### Exemple 3

Le copolymère utilisé est celui de l'exemple 1. La formule utilisée est identique à celle de l'exemple 1 sauf la teneur en DBTL qui a été doublée. La viscosité de la formule est de 870 mPa.s et passe à 1025 mPa.s après 4 heures à 130°C (+ 18 %). La tenue SAFT > 200° C est obtenue après 5 jours. La stabilité au stockage de la formule est de 15 jours environ.

### Exemple 4

Le copolymère utilisé a les caractéristiques suivantes :
- 67 % d'éthylène
- 30,2 % d'acétate de vinyle
- 2,8 % de VTMS
- MI_{190°C} = 600
- Mn = 4100, Mw = 14500, polydispersité I = 3,5.

La formule utilisée est celle de l'exemple 2. La viscosité initiale à 130° C est de 1160 cps : cette valeur reste inchangée après 4 heures à 130° C. La cohésion initiale est > 300 g après 15 s. L'évolution de la tenue SAFT est la suivante :

| **Temps de réticulation (en j)** | 1 | 2 | 3 | 4 | 5 |
|---|---|---|---|---|---|
| **Tenue SAFT (en °C)** | 70 | 72 | 90 | 95 | > 200 |

### Exemple 5

Le copolymère utilisé a les caractéristiques suivantes :
- 69,2 % d'éthylène
- 29,2 % d'acétate de vinyle
- 1,6 % VTMS
- Ml_{190°C} = 640
- Mn = 4500, Mw = 17000, polydispersité I = 3,6.

La formule utilisé est celle de l'exemple 1. La viscosité initiale à 130° C est de 1650 mPa.s et passe à 1850 mPa.s après 4 heures à 130° C (°+ 12 %). La cohésion initiale est > 350 g après 15 s. L'évolution de la tenue SAFT est la suivante :

| **Temps de réticulation (en j)** | 1 | 3 | 6 | 9 |
|---|---|---|---|---|
| **Tenue SAFT sous 250 g (en °C)** | 80 | 92 | 105 | > 200 |

Les propriétés mécaniques de l'adhésif en masse sont les suivantes :

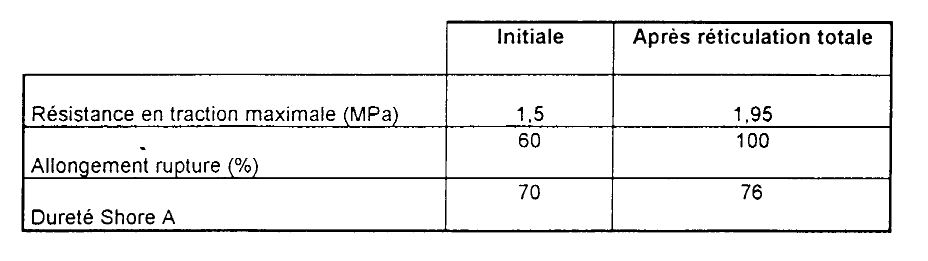

### Exemple 6

Le copolymère utilisé a les caractéristiques suivantes :
- 66,6 % d'éthylène
- 30,7 % d'acétate de vinyle
- 2,7 % VTMS
- Ml_{190°C} = 470
- Mn = 7000, Mw = 37000, polydispersité I = 5,3

La formule utilisée est celle de l'exemple 1. La viscosité initiale à 130° C est de 1975 mPa.s et passe à 2100 mPa.s après 4 heures à 130° C (+ 6 %). La cohésion initiale est > 350 g après 15 s. L'évolution de la tenue SAFT est la suivante :

| **Temps de réticulation (en j)** | 1 | 2 | 3 | 4 | 5 |
|---|---|---|---|---|---|
| **Température SAFT sous 250 g (en °C)** | 80 | 80 | 95 | 93 | > 200 |

Les propriétés mécaniques de l'adhésif en masse sont les suivantes :

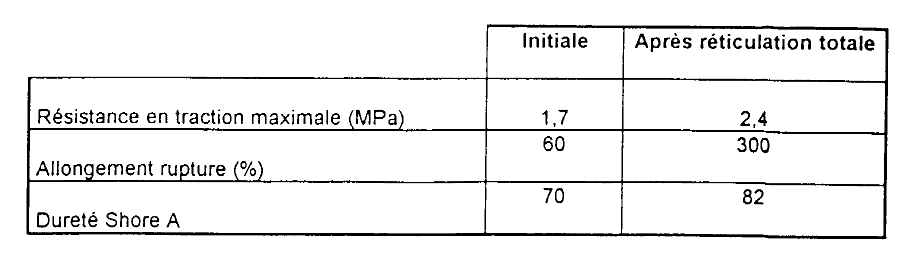

### Exemple 7

Cet exemple illustre l'utilisation d'une résine tackifiante aromatique modifiée (Hercures AR 100 de la Société Hercules). La formulation de l'adhésif est la suivante (parties en poids):
- Copolymère E/VA/VTMS exemple 6 100
- Résine Hercures AR 100 100
- Paraffine 68-70° C 16
- Cire Be Square 195 5,3
- DBTL 0,14
- Laurylamine 0,07
- VTMES 2,2

La viscosité initiale à 130° C est de 14000 mPa.s et passe à 15500 mPa.s après 4 heures à température ambiante (+ 11 %). La cohésion initiale est > 350 g après 15 s. Une tenue SAFT 200° C est atteinte en 6 jours.

### Exemple 8

Cet exemple illustre les performances en pelage sur aluminium des adhésifs de l'invention et met en évidence le rôle joué par les catalyseurs.

Les formules testées sont les suivantes :

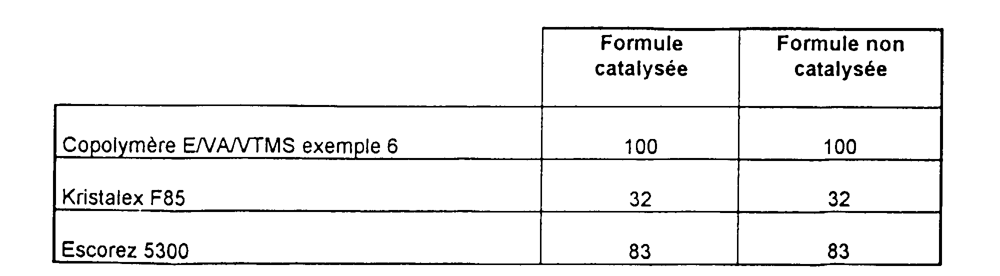

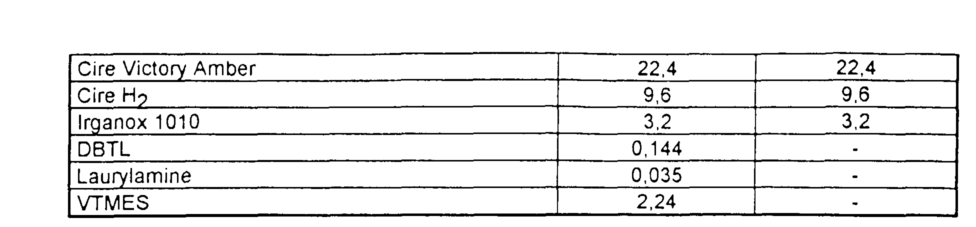

La cohésion initiale est > 350 g après 15 s pour les deux formules.

L'évolution des tenues SAFT et des forces de pelage en T sur aluminium est la suivante :

| **Temps de réticulation (en jours)** | **1** | **3** | **6** | **10** | **36** |
|---|---|---|---|---|---|
| **Tenue SAFT sous 250 g (en °C)** | | | | | |
| Formule catalysée | 70 | 150 | > 200 | > 200 | > 200 |
| Formule non catalysée | 68 | 69 | 69 | 69 | 69 |
| **Pelage en T (en N/cm)** | | | | | |
| Formule catalysée | 34,6 RC | 41,6 RC | 40,5 RC | 34,1 RC | - |
| Formule non catalysée | 41,8 RC | - | - | - | - |
| RC = Rupture Cohésive. | | | | | |

Ces résultats montrent :
- que les formules catalysées selon l'invention offrent sur aluminium des forces de pelage satisfaisantes tant immédiatement après collage qu'après réticulation.
- qu'en l'absence de catalyseur, il n'y a pas de réticulation appréciable même après plusieurs semaines d'exposition à l'atmosphère ambiante.

### Exemple 9

Cet exemple et les suivants illustrent les performances de formules uniquement catalysées par un sel d'étain.

La formule utilisée est la suivante :

| | |
|---|---|
| Copolymère E/VA/VTMS (exemple 6) | 100 |
| Krystalex F85 | 32 |
| Escorez 5300 | 83 |
| Cire Victory Amber | 64 |
| Cire H₂ | 32 |
| Irganox 1010 | 3,2 |
| DBTL | 0,14 |
| VTMES | 2,2 |

La viscosité initiale à 130° C est de 1975 mPa.s et passe à 2050 mPa.s après 4 heures à cette température.

Cohésion initiale > 350 g après 15 s. L'évolution dans le temps des propriétés d'un tel adhésif est la suivante :

| **Temps de réticulation (en jours)** | **1** | **2** | **3** | **4** | **8** | **14** |
|---|---|---|---|---|---|---|
| Température SAFT sous 250 g (en °C) | 76 | 94 | 107 | 150 | > 200 | > 200 |
| Résistance maxi en traction (MPa) | 1,9 | - | - | - | - | 2,8 |
| Allongement rupture % | 80 | - | - | - | - | 150 |

La stabilité au stockage à 25° C est de 3 semaines environ à l'abri de l'humidité.

### Exemple 10

La formulation étudiée est la suivante :
- Copolymère E/VA/VTMS exemple 6 100
- Krystalex F 85 32
- Escorez 5300 83
- Cire Victory Amber 23
- Cire H₂ 9,6
- Irganox 1010 3,2
- DBTL 0,14
- Laurylamine 0,09
- VTMES 2,2

La viscosité initiale à 130° C est de 11200 mPa.s et passe à 12800 mPa.s après 4 heures à cette température. Cohésion initiale > 350 g après 15 s.

L'évolution dans le temps des propriétés d'un tel adhésif est la suivante :

| **Temps de réticulation (en j)** | **1** | **4** | **5** | **8** | **14** | **22** |
|---|---|---|---|---|---|---|
| Température SAFT sous 250 g (en °C) | 69 | 150 | > 200 | > 200 | > 200 | >200 |
| Résistance maxi en traction (MPa) | 0,9 | 1,0 | - | 1,4 | 1,8 | 2,1 |
| Allongement rupture % | 200 | 400 | - | 650 | 630 | 690 |

### Exemple 11

Cet exemple illustre les performances en pelage sur verre des adhésifs thermo fusibles selon l'invention. Le copolymère E/VA/VTMS utilisé a les caractéristiques suivantes :
- 68,1 % d'éthylène
- 29 % d'acétate de vinyle
- 2,9 % VTMS
- Ml_{190°C} = 700

Les formules testées sont les suivantes :

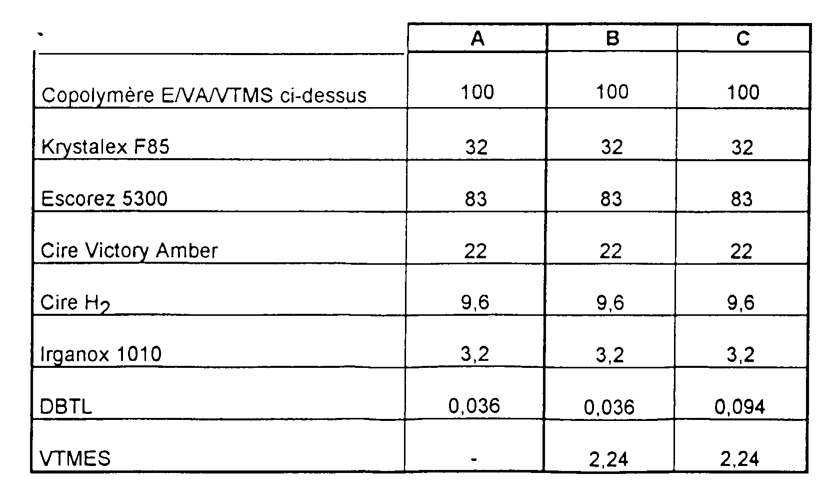

La cohésion initiale est > 350 g après 15 s pour les trois formules.

Les performances en pelage sur verre sont les suivantes (méthode dite des rouleaux flottants).

| **Temps de réticulation (en j)** | **1** | **8** | **27** |
|---|---|---|---|
| Force de pelage (N/cm) | | | |
| Formule A | 24 RC | - | 24,3 RC |
| Formule B | 16 RC | - | 20 RC |
| Formule C | 20,1 RC | 16,7 RC | 18,2 RC |
| RC = Rupture Cohésive. | | | |

On remarque que les forces de pelage otenues sont maintenues après réticulation de l'adhésif.

## Revendications

1. Composition adhésive thermofusible à base d'un copolymère comprenant des motifs d'éthylène, acétate de vinyle, vinyl alcoxy silane, et comprenant au moins un catalyseur de réticulation caractérisée en ce que sa teneur en eau est inférieure à 1000 ppm, qu'elle contient un agent déshydratant et que son indice de fluidité à 190°C est supérieur à 150.

2. Composition selon la revendication 1 caractérisée en ce que sa teneur en eau est inférieure à 200 ppm .

3. Composition selon l'une quelconque des revendications précédentes caractérisée en ce que le vinyl alcoxy silane est le vinyl triméthoxy silane ou le vinyl méthyl diméthoxy silane.

4. Composition selon l'une quelconque des revendications précédentes caractérisée en ce que le catalyseur est le laurate de dibutyl étain et éventuellement la lauryl amine.

5. Composition selon l'une quelconque des revendications précédentes dans lesquelles l'agent déshydratant est un alcoxy silane de faible volatilité et/ou un alcoxy silane qui s'hydrolyse plus facilement que le silane du copolymère.

## Claims

1. Hot-melt adhesive composition based on a copolymer including ethylene, vinyl acetate and vinylalkoxysilane units and including at least one crosslinking catalyst, characterized in that its water content is lower than 1000 ppm, in that it contains a dehydrating agent and in that its melt index at 190°C is higher than 150.

2. Composition according to Claim 1, characterized in that its water content is lower than 200 ppm.

3. Composition according to any one of the preceding claims, characterized in that the vinylalkoxysilane is vinyltrimethoxysilane or vinylmethyldimethoxysilane.

4. Composition according to any one of the preceding claims, characterized in that the catalyst is dibutyltin laurate and optionally laurylamine.

5. Composition according to any one of the preceding claims, in which the dehydrating agent is an alkoxysilane of low volatility and/or an alkoxysilane which hydrolyses more easily than the silane of the copolymer.

## Patentansprüche

1. Schmelzklebstoff-Zusammensetzung auf der Basis eines Copolymers, das Ethylen-, Vinylacetat-, Vinylalkoxysilan-Einheiten enthält, die mindestens einen Vernetzungskatalysator enthält, dadurch gekennzeichnet, daß ihr Wassergehalt kleiner als 1000 ppm ist, daß sie ein Dehydratisierungsmittel enthält und ihr Schmelzindex bei 190 °C größer als 150 ist.

2. Zusammensetzung nach Anspruch 1, dadurch gekennzeichnet, daß ihr Wassergehalt unter 200 ppm liegt.

3. Zusammensetzung nach einem der vorhergehenden Ansprüche, dadurch gekennzeichnet, daß es sich bei dem Vinylalkoxysilan um Vinyltrimethoxysilan oder Vinylmethyldimethoxysilan handelt.

4. Zusammensetzung nach einem der vorhergehenden Ansprüche, dadurch gekennzeichnet, daß es sich bei dem Katalysator um Dibutylzinnlaurat und gegebenenfalls Laurylamin handelt.

5. Zusammensetzung nach einem der vorhergehenden Ansprüche, wobei das Dehydratisierungsmittel ein Alkoxysilan mit geringer Flüchtigkeit und/oder ein Alkoxysilan ist, das leichter hydrolysiert wird als das Silan des Copolymers.
